## Europäisches Patentamt

## European Patent Office

## Office européen des brevets

(11) Publication number: **0 102 843**

**B1**

(12) **EUROPEAN PATENT SPECIFICATION**

(45) Date of publication of patent specification: **30.08.89**

(51) Int. Cl.⁴: **B 23 B 27/14**

(21) Application number: **83305130.3**

(22) Date of filing: **05.09.83**

(54) Tool inserts.

(30) Priority: **06.09.82 ZA 826496**

(43) Date of publication of application:
**14.03.84 Bulletin 84/11**

(45) Publication of the grant of the patent:
**30.08.89 Bulletin 89/35**

(84) Designated Contracting States:
**AT CH DE FR GB LI SE**

(56) References cited:
**DE-A-2 756 512**
**DE-A-2 808 455**
**DE-A-3 030 149**
**GB-A-2 049 654**
**US-A-3 233 988**

**PATENT ABSTRACTS OF JAPAN, vol. 3, no. 91**
**(C-54) 3rd August 1979;page 66 C 54; & JP - A -**
**54 68779 (SUMITOMO DENKI KOGYO K.K.)**
**02-06-1979**

(73) Proprietor: **DE BEERS INDUSTRIAL DIAMOND DIVISION (PROPRIETARY) LIMITED**
**8th Floor 45 Main Street**
**Johannesburg Transvaal (ZA)**

(72) Inventor: **Dyer, Henry Brooke**
**P.O. Box 67276**
**Bryanston 2021 (ZA)**
Inventor: **Wedlake, Roger John**
**289 Lister Road Rembrandt Park**
**Johannesburg Transvaal (ZA)**

(74) Representative: **Jones, Alan John et al**
**CARPMAELS & RANSFORD 43 Bloomsbury Square**
**London, WC1A 2RA (GB)**

(56) References cited:
**METALWORKING PRODUCTION, vol. 123, no. 11, November 1979, pages 176,177,179,181,183, London, GB; SPECIAL REPORT "Cutting tool materials-ready for tomorrows demands"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the invention

This invention relates to a method of cutting a workpiece made of ferrous metal having a Rockwell C Hardness of less than 45 using cutting tools such as turning tools or milling cutters.

Cubic boron nitride (CBN) compacts are well known in the art and consist essentially of a mass of CBN particles, present in an amount of at least 70%, preferably 80 to 90%, by volume of the compact, bonded into a hard conglomerate. Compacts are polycrystalline masses and can replace single large crystals.

Cubic boron nitride compacts, may be self bonded without the aid of a metal or like bonding matrix. Alternatively, such compacts may be produced wherein there is a suitable second or bonding matrix present. The second or bonding phase may be essentially metallic or ceramic in nature.

The starting material for the compact may include a catalyst (also known as a solvent or sintering air material) for CBN growoth.

Examples of suitable catalysts are aluminium or an alloy of aluminium with nickel, cobalt, iro,, manganese or chromium. The presence of a solvent or catalyst in the starting material is desirable because then some intergrowth between the particles may occur during compact manufacture. As is known in the art, cubic boron nitride compacts are manufactured under conditions of temperature and pressure at which the abrasive particle is crystallographically stable.

Cubic boron nitride compacts may be used for a variety of abrading application, but are particularly useful in the turning and milling of workpieces. For such applications they are mounted in the support body of a suitable cutting tool. In particular, cubin boron nitride compacts are recommended and used for the turning of Ni-hard alloys, white/chill cast iron, high speed steels, cold work tool steels, nickel/chromium irons, grey cast iron, sintered iron, cobalt-based hard facing alloys, nickel-based hard facing alloys, and for the milling of meehanite, Ni-hard alloys, cold word tool steels, and nickel-based hard facing alloys. Cubic boron nitride compacts, despite their hardness, have, however, been found not to be suitable in the cutting of ferrous materials having a Rockwell C Hardness of less than 45.

Cemented carbide inserts are also known and used for the turning and milling of ferrous materials, Cemented carbide tool inserts are sometimes provided with a thin, wear-resistant refractory layer behind the cutting edge. This refractory layer acts as a chip breaker face for the insert and has been found to increase the working life of the insert.

DE—A—2 808 455 discloses an abrasive body for machining a workpiece including an abrasive compact comprising a mass of abrasive particles, present in an amount of at least 70 percent by volume of the compact, bonded into a hard conglomerate; support means covering more than 50 percent of the surface of the compact and bonded to the compact; and the compact presenting a formation, salient in relation to the support means, capable of machining the workpiece.

According to the present invention, the use of a cutting tool comprising a supporting body having secured thereto at least one tool insert presenting a cutting edge to the workpiece, said tool insert comprising a cubic boron nitride compact comprising a polycrystalline mass of cubic boron nitride particles, present in an amount of at least 70 percent by volume, bonded into a hard conglomerate, and a thin wear-resistant layer of a refractory bonded to a surface thereof and presenting the cutting edge for the insert, said refractory being one or more of a nitride, boride, carbide, carbonitride, silicide, phosphide, or oxide of a transition metal, aluminium or silicon to cut a workpiece made of a ferrous material having a Rockwell C Hardness of less than 45 includes the steps of providing said cutting tool, causing the cutting edge to contact the workpiece, and moving the workpiece relative to the cutting edge to remove material from the workpiece.

### Description of the drawings

Figures 1 to 3 are perspective views of three embodiments of tool inserts used in the method of the invention,

Figure 4 is a perspective view of a mplling cutter,

Figure 5 is a perspective view of a turning tool, and

Figure 6 is a perspective view of the turning tool of Figure 5 acting on a workpiece.

### Description of preferred embodiments

The wear-resistant layer is a thin layer generally having a thickness of less than 50 micrometers, preferably less than 20 micrometers. It is this wear-resistant layer which provides the cutting edge for the insert.

The refractory is a nitride, boride, carbide, carbonitride, silicide, phosphide or oxide of a transition metal, aluminium or silicon. The preferred refractory is titanium nitride, titanium carbide, or mixtures thereof.

The wear-resistant layer may consist of one type of refractory only or may contain more than one type of refractory. Where more than one type .of refractory is provided in the layer, each refractory may be provided in its own discrete layer or the various refractories may be mixed in the layer.

The refractory layer may be of a crystalline or amorphous nature.

The refractory layer may be applied to the compact surface by methods well known in the art such as chemical vapour deposition, plasma activated vapour deposition, sputtering or vacuum plating. All these methods are well known and well documented in the art. The preferred method is chemical vapour deposition.

The cubic boron nitride compact may be any known in the art. Generally such compacts present a major surface on each of opposite sides thareof and to one of these major surfaces the refractory layer will be bonded. Preferred compact shapes are disc, triangular and rectangular. In the latter two shapes it is the corners which provide the cutting edge for the insert. As mentioned, the thin wear-resistant refractory layer will be bonded to one of the major surfaces of the compact. The other major surface may be polished, for example using polishing scaife. The polished surface of the compact provides good heat-conducting contact between the compact and the support body of a tool when the tool insert is secured thereto.

The cubic boron nitride compact may be bonded to a cemented carbide support. Such a supported compact is also known as a composite compact and is well known in the art. The cemented carbide is preferably cemented tungsten carbide.

The tool insert has particular use in a cutting tool such as a turning tool or milling cutter. The insert may be secured to the supporting body of a such a tool in the conventional manner.

The tool insert has been found to have particular application in the cutting of ferrous material having a Rockwell Hardness of less than 45. Indeed, it has surprisingly been found that very effective cutting of such workpieces can be achieved. For such cutting operations, the workpiece will be rotated against the cutting edge of the tool insert which will simultaneously traverse the workpiece. High peripheral speeds of the workpiece can be used, i.e. at least 50 metres/minute.

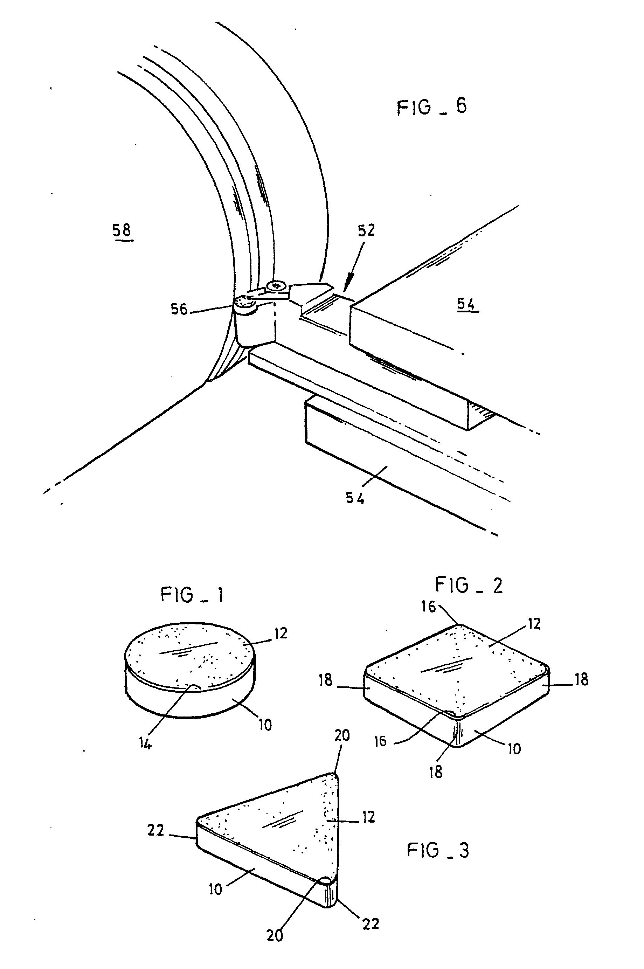

Figures 1 to 3 illustrate three embodiments of tool inserts. In each case the insert comprises a cubic boron nitride compact 10 to which is bonded a thin, wear-resistant refractory layer 12. In each case the refractory layer is bonded to one of the major surfaces of the compact. The insert of Figure 1 has a disc shape and it is the top edge 14 of the refractory layer 12 which provides the cutting of the insert. The insert of Figure 2 has a rectangular shape and it is the top edge 16 of each corner 18 which provides the cutting edge for the insert. The insert of Figure 3 is triangular in shape and it is the edge 20 of each corner 22 which provides the cutting edge for the tool.

In one particular example of the invention, the refractory layer for a tool insert consisted of three zones. The first zone in contact with the compact surface was an 0,5 micrometre thick zone of titanium carbide; the second zone on top of the titanium carbide zone was a 10 micrometer thick titanium carbide/titanium nitride transition zone; and the third zone on top of the transition layer was a 1 to 2 micrometer thick titanium nitride outer zone. The various zones for the layer were deposited on the compact substrate using standard chemical vapour deposition techinques. The refractory layer as a whole, i.e. comprising all three zones, adhered strongly to the compact substrate.

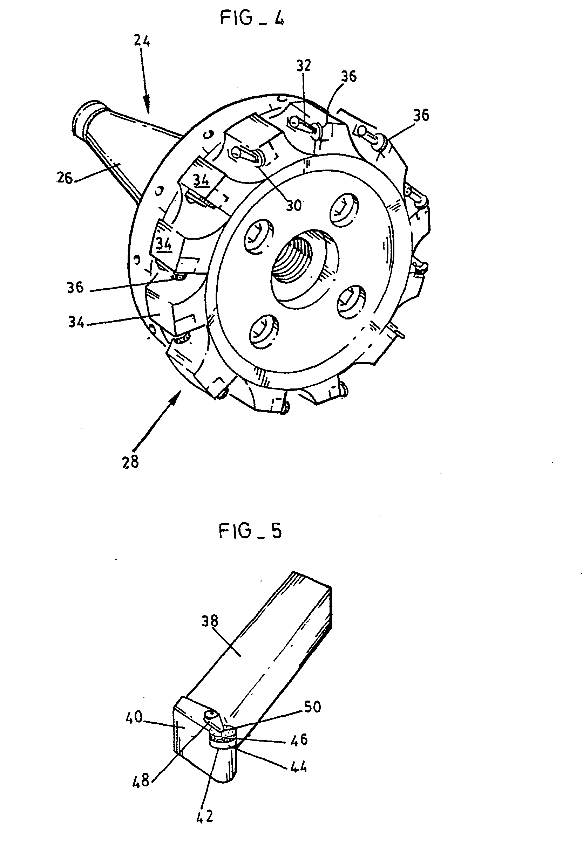

Figure 4 illustrates the cutting head of mulling cutter incorporating a plurality of tool inserts. The cutting head 24 has a shaft 26 adapted to be mounted for rotation in the milling machine and an enlarged cutting end 28. On the cutting end 28 are secured a plurality of tool inserts 30. Each insert 30 is clamped by means of clamping plate 32 to the side of a projection 34. The mounting is such that the surface 36 of each insert is the refractory layer and it is the edge thereof which provides the cutting edge. The cutting head is of conventional configuration, save for the provision of the inserts.

Figure 5 illustrates a tool holder for use in turning workpieces. The tool holder is of conventional configuration, save for the provision of the insert. The tool holder has a shank 38 for mounting between appropriate clamping plates or arms. The end 40 of the shank has a recess 42 which accommodates a supporting shim 44 (usually of cemented carbide) and an insert 46. The shim 44 and the insert 46 are held in the recess by means of clamp 48. The top surface 50 of the insert is the refractory layer and it is the peripheral edge of this surface which provides the cutting edge for the insert.

Figure 6 illustrates a typical turning operation using a turning tool of Figure 5. The tool shank 52 is mounted between clamping plates 54 and in this position presents an upper cutting edge 56 to a workpiece 58. The mounting is generally such that this cutting edge 56 is at a negative rake angle relative to the workpiece. The workpiece is rotated and the cutting edge fed in a certain depth. Typically, the depth of infeed of the cutting edge will be of the order of 0,5 to 2,5 mm. The cutting edge, during rotation of the workpiece, is caused to traverse the workpiece a predetermined distance per revolution of workpiece. The traverse rate will vary according to the nature of the workpiece being turned. The rotational speed of the workpiece will generally be such that the peripheral speed thereof will be at least 50 metres/minute. During this operation, material is removed from the workpiece.

It has surprisingly been found that soft ferrous materials, i.e. having a Rockwell C Hardness of less than 45, such as annealed D3 steel can be effectively turned and milled using the method of the invention, as described above. Better removal rates compared with uncoated cubic boron nitride compacts and cemented carbide inserts are achieved, and the life of the insert is longer than either of these two prior art products.

## Claim

The use of a cutting tool comprising a supporting body having secured thereto at least one tool insert presenting a cutting edge to the workpiece, said tool insert comprising a cubic boron nitride compact comprising a polycrystalline mass of cubic boron nitride particles, present in an amount of at least 70 percent by volume, bonded into a hard conglomerate, and a thin wear-resistant layer of a refractory bonded to a surface thereof and presenting the cutting edge for the insert, said refractory, being one or more of a nitride, boride, carbide, carbonitride, silicide, phosphide, or oxide of a transition metal, aluminium or silicon to cut a workpiece made of a ferrous material having a Rockwell C Hardness of less than 45 including the steps of providing said cutting tool, causing the cutting edge to contact the workpiece, and moving the workpiece relative to the cutting edge to remove material from the workpiece.

## Patentanspruch

Verwendung eines Schneidwerkzeugs, umfassend einen Trägerkörper und, an diesem befestigt, wenigstens einen Werkzeugeinsatz, der dem Werkstück eine Schneidkante darbietet, wobei der Werkzeugeinsatz einen Compact aus kubischem Bornitrid, der eine polykristalline Masse aus kubischen Bornitrid-Teilchen umfaßt, die in einer Menge von wenigstens 70 Vol.-%, eingebunden in ein hartes Konglomerat, vorliegen, und eine dünne verschleißfeste Schicht aus einem feuerfesten Material, die an eine Oberfläche desselben gebunden ist und die Schneidkante für den Einsatz darstellt, umfaßt, wobei das feuerfeste Material aus einem oder mehreren Stoffen aus einem Nitride, Borid, Carbid, Carbonitride, Silicid, Phosphid oder Oxid eines Übergangsmetalls oder von Aluminium oder Silicium besteht, zum Schneiden eines Werkstücks aus einem eisenhaltigen Material mit einer Rockwell-Härte C von weniger als 45, umfassend die Schritte des Bereitstellens des genannten Schneidwerkzeugs, des Veranlassens, daß die Schneidkante mit dem Werkstück in Berührung kommmt, und des Bewegens des Werkstücks relativ zu der Schneidkante, um Material von dem Werkstück zu entfernen.

## Revendication

Utilisation d'un outil de coupe, l'outil comportant un élément de support sur lequel est fixé au moins un insert pour outil présentant un bord de coup pour une pièce à usiner, le dit insert pour outil étant constitué par un aggloméré de nitrure de bore cubique consistant en une masse polycristalline de particules de nitrure de bore cubique, présentes dans une proportion d'au moins 70 pour cent en volume, liées en un conglomérat dur, et par une couche mince résistance à l'usure d'un réfractaire lié à une surface du dit insert et présentant un bord de coupe pour l'insert, le dit réfractaire étant constitué par un ou plus parmi des élements suivants: nitrure, borure, carbure, carbonitrure, siliciure, phosphure, ou un oxyde d'un métal de transition, aluminium ou silicium, le dit insert étant destiné à couper une pièce à usiner en matériau ferreux ayant une dureté Rockwell C inférieure à 45, cette utilisation comportant les étapes selon lesquelles on se procure le dit outil de coupe, on met le bord de coupe en contact avec le pièce à usiner, et on déplace la pièce à usiner par rapport au bord de coupe pour enlever du matériau de la pièce à usiner.

FIG _ 6

FIG _ 1

FIG _ 2

FIG _ 3

FIG _ 4

FIG _ 5